# EUROPEAN PATENT APPLICATION

(11) **EP 0 585 192 A1**
(43) Date of publication of application: **02.03.1994**
(21) Application number: 93480107.7
(22) Date of filing: 30.07.1993
(51) Int. Cl.: G06F 3/033

(54) **Method and system for data sort manipulation in a data processing system**

(30) Priority: 21.08.1992 US 934095
(71) Applicant: INTERNATIONAL BUSINESS MACHINES CORPORATION, Armonk, N.Y. 10504 (US)
(72) Inventor: Carroll, John Franklin, League City, Texas 77573 (US); Gorrell, John William, Jr., Friendswood, Texas 77546 (US)
(74) Representative: de Pena, Alain

(57) **Abstract**

A method and system for permitting enhanced sorting and manipulation of data displayed within multiple columns in a window within a data processing system. Data is displayed in a multi-column list within the data processing system, with an appropriate column title above each column in the display. A preselected sort rule is associated with each column title and the data is then automatically sorted in accordance with an associated sort rule, in response to a selection of a particular column title by a user. Vertical and horizontal scroll bars are provided to permit manual vertical and horizontal scrolling of the data. A data entry field within the window is also provided for receiving a textual entry from a user. The data within the window is then automatically scrolled to display textual entries which correspond to the textual entry entered by the user within the data entry field, in response to that entry.

## Description

The present invention relates in general to improved data processing systems and in particular to improved methods in a data processing system for manipulating data therein. Still more particularly, the present invention relates to improved methods and systems for manipulating and sorting data displayed within a multi-column list of data.

The manipulation of data in a data processing system is well known in the prior art. Data may be manipulated in many ways in a modern state-of-the-art data processing system including: data accessing; data encoding; data communications; data compression; data conversion; data entry; data exchange; data filing; data linking; data locking; data manipulation; data mapping; data modeling; data processing; data recording; data sorting; and data transferring. The large amounts of data which are available to the user of a modern state-of-the-art data processing system often become overwhelming in its magnitude and complexity.

As a result of the increasing complexity of data processing systems attempts have been made to simplify the interface between a user and the large amounts of data present within a data processing system. One example of an attempt to simplify the interface between a user and a data processing system is the utilization of a so-called Graphical User Interface (GUI) to provide an intuitive and graphical interface between the user and a data processing system. The Common User Access (CUA) user interface is one example of such a Graphical User Interface. Common User Access is a trademark of the International Business Machines Corpcration. The Common User Access (CUA) user interface is often utilized to organize and present large amounts of data to a user in a graphical and intuitive manner.

One technique for presenting a list of objects or settings choices to a user wherein multiple objects may be selected is the utilization of the so-called "List Box." A List Box is typically utilized to display a list of settings choices or objects in which the number of choices or objects may vary. A List Box generally displays the settings choices or objects in an order that is meaningful to the user, such as alphabetic order, numeric order, chronological order or some other order. For example, modem baud rates are often displayed in numeric order. Typically such List Boxes are large enough to display a plurality of choices, such as six or eight, and such boxes often include vertical or horizontal scroll bars, if the data is too large to be entirely visible within the List Box.

A scroll bar is a known user interface component which is associated with a scrollable area that indicates to a user that more information is available or may be added in a particular direction with respect to the display. A scroll bar may be utilized to scroll additional data into view and a scroll bar typically includes a scroll box, a shaft and scroll buttons.

Thus, those skilled in the data processing art will appreciate that while a simple lists of objects or settings choices may be displayed in a graphical interface such as a List Box, the types of data which are displayable within such a scrollable list are limited to a simple column of possible choices or objects. More complex listings of information typically include multiple columns of data which are related and which are not easily manipulatable utilizing a scroll technique.

Thus, a need exists for a method and system which permits a multi-column list of data to be easily sorted and manipulated within a data processing system.

It is therefore one object of the present invention to provide an improved data processing system.

It is another object of the present invention to provide an improved method in a data processing system for manipulating and sorting data therein.

It is yet another object of the present invention to provide an improved method and system for manipulating and sorting data displayed within a multi-column list of data.

The foregoing objects are achieved as is now described. The method and system of the present invention permit enhanced sorting and manipulation of data displayed within multiple columns in a window within a data processing system. Data is displayed in a multi-column list within the data processing system, with an appropriate column title above each column in the display. A preselected sort rule is associated with each column title and the data is then automatically sorted in accordance with an associated sort rule, in response to a selection of a particular column title by a user. Vertical and horizontal scroll bars are provided to permit manual vertical and horizontal scrolling of the data. A data entry field within the window is also provided for receiving a textual entry from a user. The data within the window is then automatically scrolled to display textual entries which correspond to the textual entry entered by the user within the data entry field, in response to that entry.

The above as well as additional objects, features, and advantages of the present invention will become apparent in the following detailed written description.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein:
Figure 1 is a pictorial representation of a computer system which may be utilized to implement the method and system of the present invention;
Figure 2 is a pictorial representation of a multi-column data list which may be manipulated in accordance with the method and system of the present invention;
Figure 3 is a high level logic flowchart illustrating the manipulation and sorting of data within the multi-column data list of Figure 2 in accordance with the method and system of the present invention; and
Figure 4 is a high level logic flowchart illustrating the addition of data to the multi-column data list of Figure 2 utilizing a "drag and drop" technique in accordance with the method and system of the present invention.

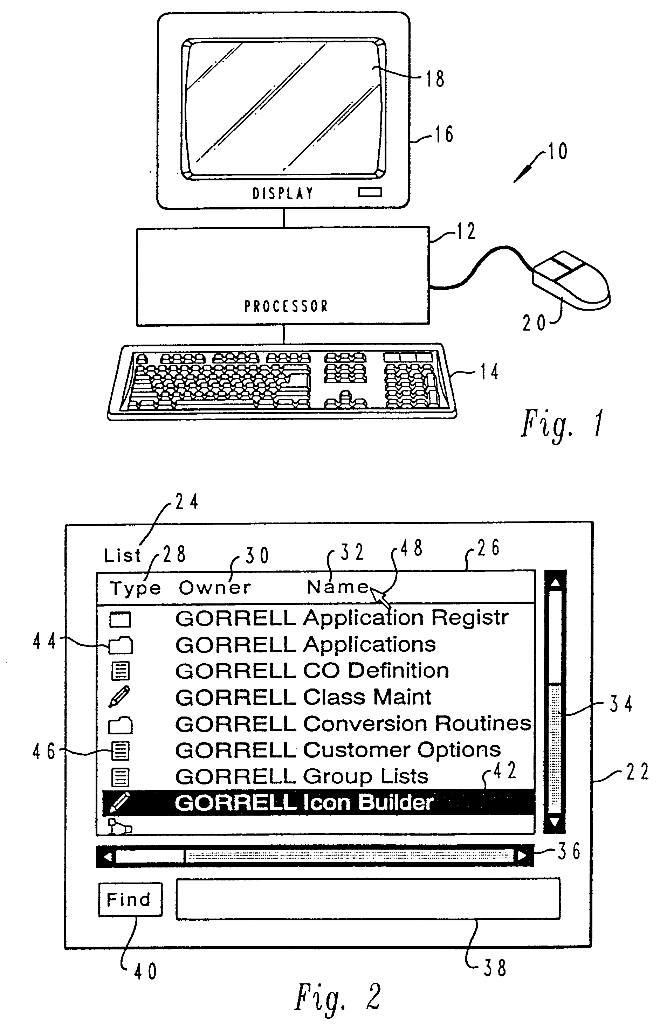

With reference now to the figures and in particular with reference to Figure 1, there is depicted a pictorial representation of a computer system 10 which may be utilized to implement the method and system of the present invention. As is illustrated computer system 10 preferably includes a processor 12 which is coupled to a keyboard 14 and display device 16 in a manner well known in the art. Display device 16 includes a display screen 18. Those skilled in the art will appreciate that computer system 10 may be implemented by utilizing any suitable computer including main frame computers, minicomputers, and so-called "personal computers" or workstations which are coupled to a main frame host computer. One example of a computer system which may be utilized to implement the method and system of the present invention is the International Business Machines Corporation PS/2 Personal Computer.

Referring now to Figure 2, there is depicted a pictorial representation of a multi-column data list which may be manipulated in accordance with the method and system of the present invention. As illustrated, the multi-column data list is displayed within a window 22, which may be provided utilizing any suitable operating system. Depicted within window 22 is data title 24. Data title 24 preferably indicates to the user the general subject matter of the data which is listed within the multi-column data list displayed within window 22.

Next, in accordance with an important feature of the present invention, the multi-column data list displayed within window 22 includes a column title bar 26. Column title bar 26 is preferably utilized to display a plurality of column titles 28, 30, and 32, each of which is associated with a column of data displayed under the associated column title. Thus, a graphic indication of the type of object within the multi-column data list is depicted beneath column title 28 which indicates the type of object within the list. Similarly, beneath column title 30, the owner of each object within the multi-column data list is depicted. Finally, column title 32 indicates the name of each object within the multi-column data list depicted within window 22. As will be explained in greater detail below, the selection of a particular column title may be utilized to automatically sort the data within the multi-column data list in accordance with a preselected sort routine.

Also depicted within window 22 are vertical scroll bar 34 and horizontal scroll bar 36. As is common in such scroll bars, each scroll bar depicted includes a scroll box, a shaft, and scroll buttons which may be graphically selected, for example, by utilizing mouse pointer 48 to cause the scrolling of data within the display area of window 22 to reveal data not presently displayed within that window. Thus, additional columns of data which are currently outside the scope of window 22 may be displayed by scrolling the data horizontally, to the right or left.

In accordance with an important feature of the present invention, window 22 also preferably includes a data entry field 38. Data entry field 38 may be selected utilizing the cursor or mouse pointer 48 and a user of computer system 10 may enter a textual entry therein. After conclusion of a textual entry, as indicated by the depression of an "enter" or "return" key, or by graphically selecting "find" button 40, a search will be performed in a manner which will be explained in greater detail herein, to locate and display any textual entries within the multi-column data list depicted within window 22 which correspond to the data entry entered by the user within data entry field 38.

Additionally, the selection by a user utilizing a cursor or mouse pointer 48 of a particular row within the multi-column data list depicted within window 22 may be indicated graphically by highlighting or reverse video, such as illustrated at reference numeral 42. The particular embodiment of the present invention depicted within Figure 2 utilizes iconic representations 44 and 46 within the "Type" column to indicate the types of objects listed within the multi-column data list depicted within window 22.

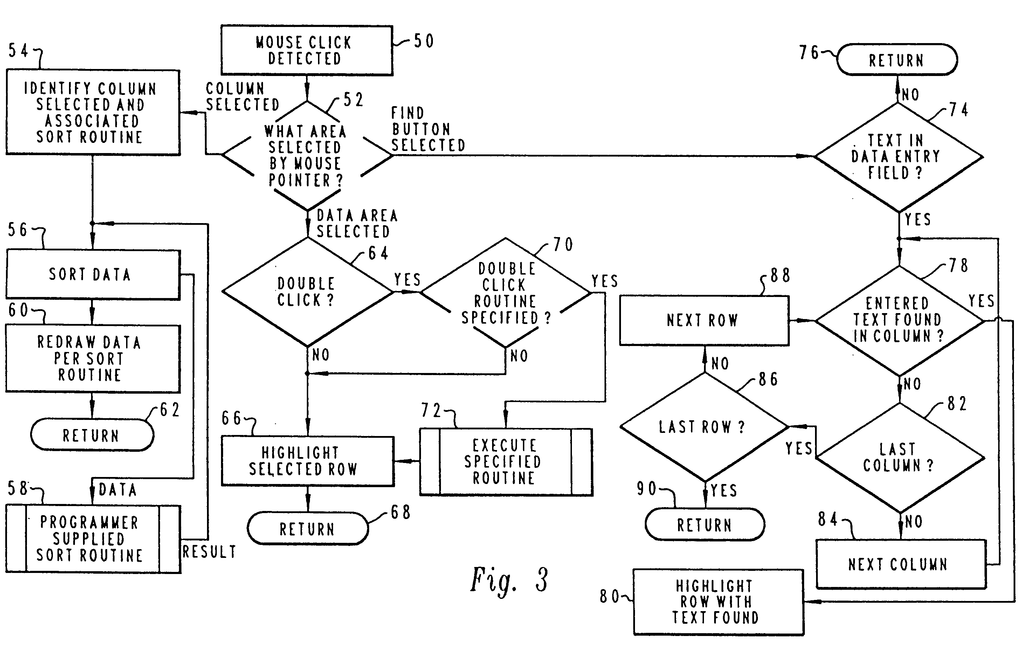

With reference now to Figure 3 there is depicted a high level logic flowchart which illustrates the manipulation and sorting of data within the multi-column data list of Figure 2 in accordance with the method and system of the present invention. As illustrated, the process begins at block 50 which depicts the detection of a so-called mouse "click." At that point, as will be well understood by those having ordinary skill in the art, the location of mouse pointer 48 (see Figure 2) within window 22 will be determined, as illustrated in block 52.

In the event mouse pointer 48 is detected within column title bar 26 (see Figure 2) the process passes to block 54 which depicts the identification of the column selected and the identification of an associated sort routine which has been preselected for utilization with that particular column. Next, the process passes to block 56 which illustrates the sorting of the data within the multi-column data list in accordance with the associated sort routine which has been selected and provided by the programmer, as depicted at block 58. Upon completion of the sort, the process passes to block 60. Block 60 illustrates the redrawing of the data within the multi-column data list in accordance with the results of the sort routine associated with the selected column. Thereafter, the process passes to block 62 and returns.

Upon reference to the foregoing those skilled in the art will appreciate that in accordance with the method and system of the present invention a different associated sort routine may be associated with each column within the multi-column data list and thus, the selection of particular columns within the multi-column data list may be utilized to initiate the sorting of the data within the multi-column data list in accordance with several entirely different sort routines. Thus, for example, the objects listed within the multi-column data list may be sorted alphabetically by the name of the objects if the "Name" column has been selected. Similarly, as another example, the objects may be sorted by the "Owner" in accordance with a sort routine which sorts by management levels within an organization.

Referring again to block 52, in the event mouse pointer 48 is located within a data area, the process passes to block 64. Block 64 illustrates a determination of whether or not a so-called "double click" has been detected. Those skilled in the art will appreciate that a "double click" typically constitutes a rapid depression of a mouse button twice within a limited period of time, such as a fraction of one second. In the event a "double click" has not been detected, the process passes to block 66 which illustrates the highlighting of a selected row within the multi-column data list, in a manner such as that indicated at reference numeral 42 within Figure 2. Thereafter, the process returns, as depicted at block 68.

Referring again to block 64, in the event a "double click" has been detected, the process passes to block 70. Block 70 illustrates a determination of whether or not a "double click" routine has been specified and if not, the process merely passes to block 66 to highlight the selected row in the manner described above. Referring again to block 70, in the event a "double click" routine has been specified, the process passes to block 72 which illustrates the execution of the specified routine, the highlighting of the selected row, as illustrated in block 66 and the subsequent return of the process, as illustrated at block 68. Those skilled in the art will appreciate that a programmer may specify a particular routine to be executed upon the detection of a "double click," such as the initiation of a executable program or the displaying of a sub-list of additional information, for example.

Referring again to block 52, in the event mouse pointer 48 is detected within "find" button 40, the process passes to block 74. Block 74 illustrates a determination of whether or not the user has entered text into data entry field 38 (see Figure 2). If not, the process merely passes to block 76 and returns. However, in the event the user has entered data within data entry field 38, as determined at block 74, the process passes to block 78.

Block 78 illustrates a determination of whether or not the entered text has been found within a column in the multi-column data list and if so, the data within the multi-column data list automatically scrolls to the location of that text. Next, the process passes to block 80 which illustrates the highlighting of the row which contains the text found which corresponds to the text entered by the user within data entry field 38. Thus, by the provision of data entry field 38 and "find" button 40, the method and system of the present invention provides a simple and efficient manner for locating a particular textual entry within a large and possibly complex multi-column data list.

Returning to block 78, in the event the text entered by the user within data field 38 is not found within the column, the process passes to block 82. Block 82 illustrates a determination of whether or not the column under examination is the last column and if not, the process passes to block 84. Block 84 illustrates the processing of the next column and the process then returns to block 78 in an iterative fashion. Referring again to block 82, in the event the last column has been examined, as determined within block 82, the process passes to block 86. Block 86 depicts a determination of whether or not the row under examination within the multi-column data list of Figure 2 is the last row. If not, the process passes to block 88 which illustrates the examination of the next row and the process returns to block 78 in an iterative fashion. Referring again to block 86 in the event the last row and last column of text within the multi-column data list has been examined, the process passes to block 90 and returns.

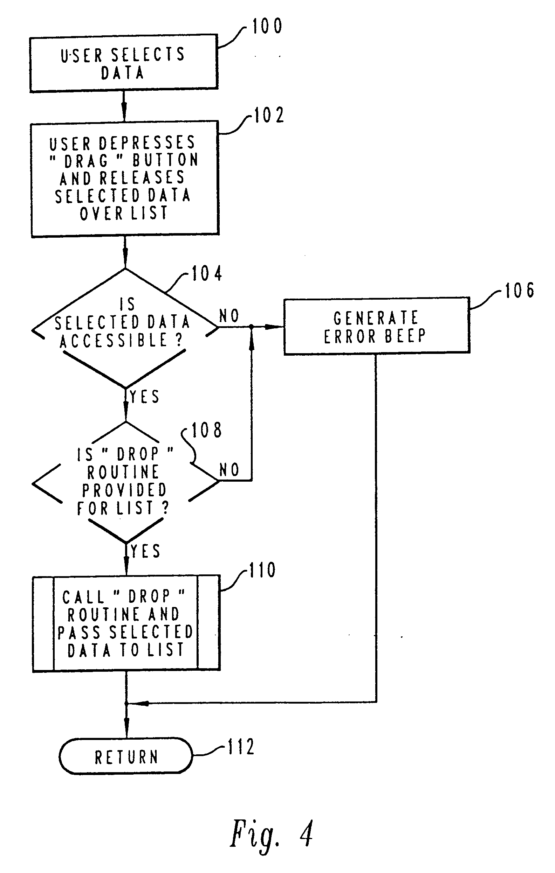

Finally, referring now to Figure 4, there is depicted a high level logic flowchart illustrating the addition of data to the multi-column data list of Figure 2 utilizing a "drag and drop" technique, in accordance with the method and system of the present invention. As illustrated, this process begins at block 100 with the selection of data to be added to the multi-column data list by the user. Next, the process passes to block 102 which illustrates the depression by the user of the "drag" button and the release of the data at some point over the multi-column data list illustrated within Figure 2. Of course, this may be accomplished by releasing an iconic representation of data over the iconic representation associated with each item within the multi-column data list of Figure 2.

Next, the process passes to block 104 which illustrates a determination of whether or not the data selected by the user is "accessible." That is, data which may be assimilated and utilized by the multi-column data list of Figure 2. If not, the process passes to block 106 which illustrates the generation of an error "beep" in a manner well known to those having skill in the computer art. Referring again to block 104 in the event the data selected by the user is accessible to the multi-column data list of Figure 2 the process passes to block 108. Block 108 illustrates a determination of whether or not "drop" routine has been provided for the object within the multi-column data list which the user desires to add data to. If not, the process again passes to block 106 and once again generates an error "beep."

Referring again to block 108 in the event a "drop" routine is provided for the object to which the user desires to add data within the multi-column data list, the process passes to block 110. Block 110 illustrates the calling of the "drop" routine and the passing of the user selected data to the object within the multi-column data list of Figure 2. Thereafter, or after generating the error "beep" discussed with respect to block 106, the process passes to block 112 and returns.

Upon reference to the foregoing those skilled in the art will appreciate that the Applicants herein have provided a novel method and system for manipulating and sorting complex lists of data, such as multi-column data lists which is both graphically intuitive and efficient and which permits the user to rapidly and accurately locate and manipulate data within a complex data list.

## Claims

1. An improved method for manipulating data displayed within a plurality of columns in a window within a data processing system, said method comprising the steps of:
assigning one of a plurality of sort rules to each of said plurality of columns;
permitting a user to select a particular one of said plurality of columns; and
automatically sorting said data in accordance with said one of said plurality of sort rules assigned to said particular one of said plurality of columns in response to said user selection.

2. The improved method for manipulating data displayed within a plurality of columns in a window within a data processing system according to Claim 1, wherein said data processing system includes a graphical pointing device and wherein said step of permitting a user to select a particular one of said plurality of columns comprises permitting a user to graphically select a particular one of said plurality of columns utilizing said graphical pointing device.

3. The improved method for manipulating data displayed within a plurality of columns in a window within a data processing system according to Claim 2, further including the step of providing a displayed column title for each of said plurality of columns and wherein said step of permitting a user to select a particular one of said plurality of columns utilizing said graphical pointing device comprises the step of permitting a user to select a particular one of said displayed column titles utilizing said graphical pointing device.

4. The improved method for manipulating data displayed within a plurality of columns in a window within a data processing system according to Claim 1, wherein at least one of said plurality of sort rules comprises an alphabetical sort rule.

5. The improved method for manipulating data displayed within a plurality of columns in a window within a data processing system according to Claim 2, wherein said window includes at least one scroll bar and wherein said data may be scrolled in response to a selection of said scroll bar by said user utilizing said graphical pointing device.

6. The improved method for manipulating data displayed within a plurality of columns in a window within a data processing system according to Claim 5, wherein said at least one scroll bar is a horizontal scroll bar and wherein said method further comprises displaying additional columns within said window in response to a selection of said horizontal scroll bar by said user utilizing said graphical pointing device.

7. The improved method for manipulating data displayed within a plurality of columns in a window within a data processing system according to Claim 1, wherein said window includes a data entry field for receiving a textual entry entered by said user and wherein said data is scrolled automatically to display a textual entry within said data which corresponds to said textual entry entered by said user in response to said entry.

8. A data processing system for manipulating displayed data, said data processing system comprising;
a display device for displaying data in a plurality of data columns within a window in said display device;
means for associating one of a plurality of sort rules with each of said plurality of data columns within said data processing system;
means for permitting a user to select a particular one of said plurality of data columns; and
means for automatically sorting said data in accordance with said one of said plurality of sort rules in accordance with said one of said plurality of sort rules associated with said particular one of said plurality of data columns in response to said user selection.

9. The data processing system for manipulating displayed data according to Claim 8, wherein said data processing system includes a graphical pointing device and wherein said means for permitting a user to select a particular one of said plurality of data columns comprises means for detecting an operation of said graphical pointing device to select a particular one of said plurality of data columns.

10. The data processing system for manipulating displayed data according to Claim 8, further including at least one scroll bar for scrolling data displayed within said display device.

11. The data processing system for manipulating displayed data according to Claim 9, wherein said at least one scroll bar comprises a horizontal scroll bar and wherein said data processing system further includes means for displaying additional ones of said plurality of data columns in response to a selection of said horizontal scroll bar utilizing said graphical pointing device.

12. The data processing system for manipulating displayed data according to Claim 8, wherein said data processing system includes user data entry means and wherein a data entry field is displayed within said display device for receiving a textual entry entered by a user utilizing said user data entry means.

13. The data processing system for manipulating displayed data according to Claim 12, further including means for scrolling said data displayed within said display device to display a textual entry within said data which corresponds to said textual entry entered by said user within said data entry field.
